Europäisches Patentamt

European Patent Office

Office européen des brevets

(19)

(11) Publication number: **0 142 967**

**A2**

(12)

# EUROPEAN PATENT APPLICATION

(21) Application number: **84307782.7**

(22) Date of filing: **09.11.84**

(51) Int. Cl.⁴: **G 06 K 9/20**

(30) Priority: **23.11.83 GB 8331312**

(43) Date of publication of application:
**29.05.85 Bulletin 85/22**

(84) Designated Contracting States:
**DE FR GB IT**

(71) Applicant: **UNISPLAY S.A.**
**56 Grand' Rue**
**CH-1700 Fribourg(CH)**

(72) Inventor: **Salam, Hassan Paddy Abdel**
**63 Lowther Road**
**Barnes London S.W. 13(GB)**

(74) Representative: **Crawford, Andrew Birkby et al,**
**A.A. THORNTON & CO. Northumberland House 303-306**
**High Holborn**
**London WC1V 7LE(GB)**

(54) **Optical document scanner.**

(57) A low cost, hand operated optical document scanner for human readable information comprises a hand-held light pen (10) and a stencil (1). The stencil is provided with a zigzag track consisting of a number of parallel straight tracks (2) joined to each other by bend portions (4). The light pen (10) has a tip arrangement which engages in the zigzag track and is adapted to prevent rotation of the light pen during movement thereof along the track. The stencil is provided with index marks (20) along the length of the tracks (2) in order to provide timing signals for the light pen (10) and may also be provided with an indicia indicating the end or beginning of a straight track (2). The optical arrangement of the light pen (10) can be adapted such that, when the stencil (1) is made of transparent material, areas between adjacent straight tracks (2) can be scanned by the light pen (10).

FIG. 1.

- 1 -

## OPTICAL DOCUMENT SCANNER

Background of the Invention

The present invention relates to an optical document scanner of a type which is hand-propelled.

This invention provides a low-cost system for use by the general public for electronically reading human readable alpha-numeric text into personal computers.

Further applications include reading personal documents such as bank statements and also published text in newspapers, magazines and books into personal computers. This saves having to type the information into the computer. Drawings and diagrams also can be transferred to the computer.

. There have been many prior proposals for optical document scanners but most have required complicated machinery and have hence been very expensive to purchase and difficult to maintain.

Hand-operated devices have also been proposed which comprise a hand-held light pen and a stencil. Such devices are disclosed in U.S. Patents Nos. 3,859,632 and 3,735,350. The disadvantages of these arrangements are that they do not scan the whole area of the document, rather they scan discrete predetermined areas. Further, they require codes such as bar codes which are scanned rather than any alpha-numeric data which may be present on the document.

## Summary of the Invention

It is an object of the present invention to provide optical document scanning apparatus which is hand operated and will be simple in construction and hence inexpensive.

It is a further object of the present invention to provide optical document reading apparatus which does not require the use of special codes and can be used to read all types of information including alpha-numeric characters.

It is a further object of the present invention to provide optical document reading apparatus which will scan the whole area of the document.

The present invention provides apparatus for scanning human readable information on a document comprising a guide member arranged to be placed on said document and including means defining at least one straight guide track, and a hand propelled scanning head having a tip arrangement for engagement with said track for travelling along it, said tip arrangement being adapted to prevent rotation of said scanning head during its travel along said track, said apparatus including means independent of marks on said document for generating timing signals having a frequency proportional to the speed of travel of said scanning head along said track and said scanning head further including means for sensing a linear array of points on said document, said linear array being aligned at an angle relative to the direction of travel along said track.

The present invention also provides apparatus for reading information on a document comprising a guide member arranged to be placed on said document, said guide member including at least one straight guide track, said apparatus including a hand propelled scanning head having a tip arrangement engaged with said track for travelling along it, and means independant of marks on said document indicating arrival of said scanning head at an end of said straight guide track.

The present invention also provides a guide sheet for guiding a hand propelled scanning head arranged for scanning a printed document said guide sheet including a zig zag track having plurality of straight track portions and including an array of index marks associated with each said straight track portion.

Brief Description of the Drawings

Further features and advantages of the present invention will become apparent from the following description of embodiments thereof when taken in conjunction with the accompanying drawings, in which:-

Figure 1 illustrates in plan view one embodiment of a guide sheet according to the invention;

Figure 2 illustrates a cross-sectional side view of the arrangement in Figure 1 taken along section Y-Y;

Figure 3 illustrates a light pen for use with a guide sheet according to the invention ;

Figure 4 illustrates a cross-sectional side view of light pen 10 engaged with the guide sheet;

Figure 5 illustrates the guide sheet of Figure 1 mounted on a document to be read;

Figure 6 illustrates in plan view an alternative arrangement of the guide sheet and shows a light pen on the guide sheet;

Figure 7 illustrates a cross-sectional side view of the arrangement in Figure 6; and

Figure 8 illustrates a form of track.

Detailed Description of the Invention

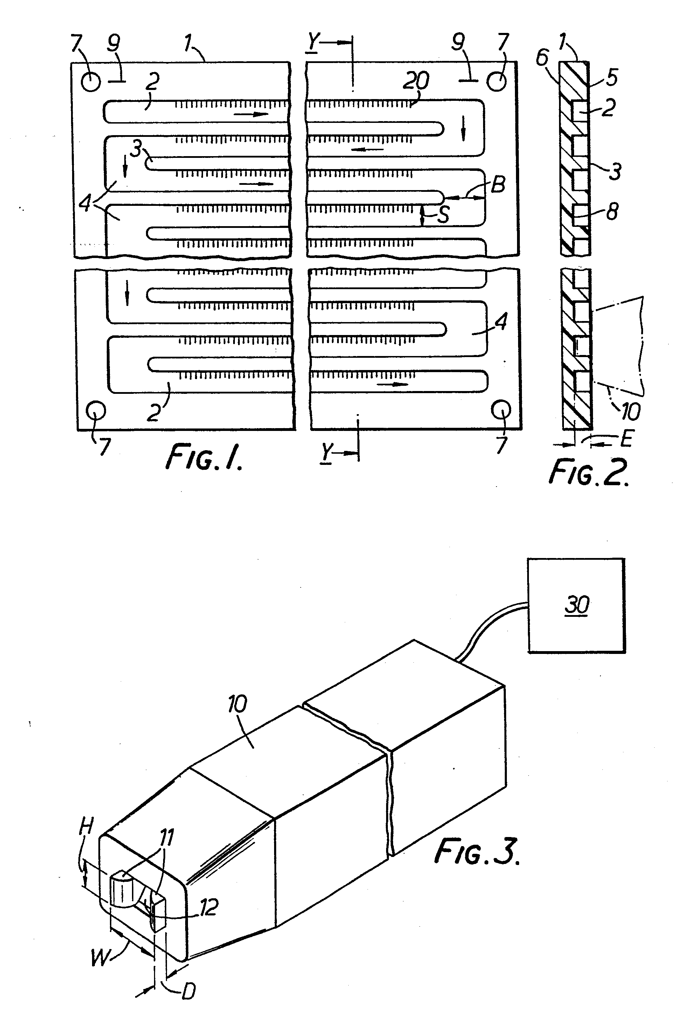

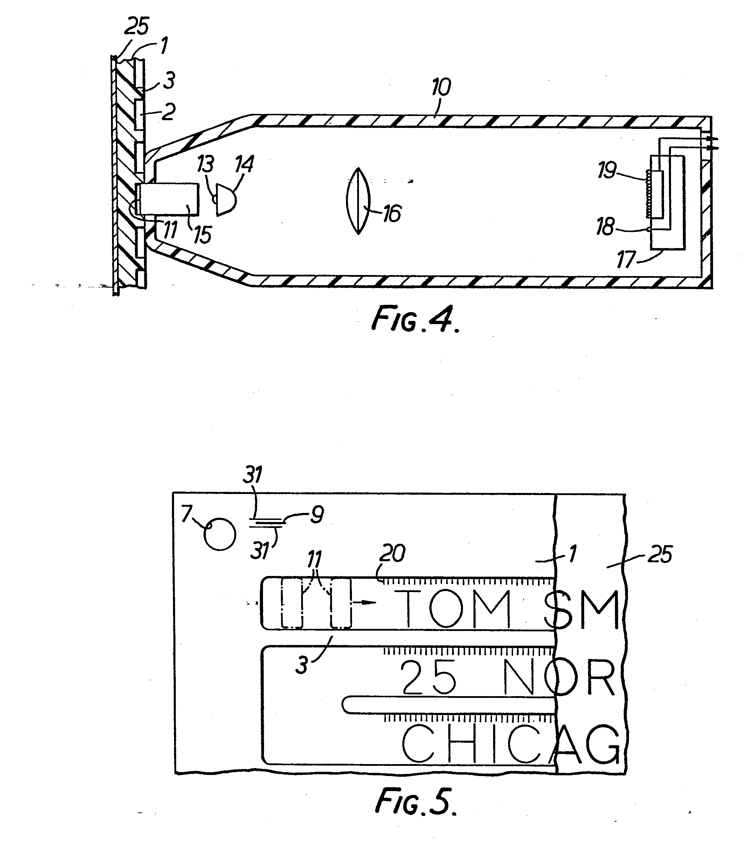

Figures 1 to 5 illustrate one embodiment of the invention. A scanning head or light pen 10 shown in Figure 3 is guided by guide means in the form of a track or groove in a guide sheet 1 of transparent material to scan a document 25. Light pen 10 is hand propelled and is connected to a computer 30 which is arranged to store and interpret the scanned information.

The guide means includes straight groove sections 2 separated from each other by straight ridges 3. Groove sections 2 are joined together by a series of hairpin-bend groove portions 4 to form one long zig zag groove starting at the top left hand corner and ending at the bottom right hand corner of guide sheet 1. The zig zag groove is formed in a face 5 of sheet 1. The opposite face 6 is smooth and is placed on top of the document to be read.

The zig zag groove is arranged to guide the hand propelled light pen 10, which has a guide arrangement consisting of a pair of guide tips 11 arranged to slide in and along the zig zag track. Straight groove sections 2 have a height S which is only very slightly greater than height H of tips 11 so that light pen 10 is guided for sliding motion along groove sections 2. The pair of tips 11 has a width W greater than height H and when these tips are in straight groove sections 2 light pen 10 is substantially prevented from rotating about its longitudinal axis. Width B of the hairpin-bend portions 4 is made equal to a greater than width W. The zig zag groove has a depth E which is slightly greater than depth D of tips 11 so that tips 11 do not touch floor 8 of the zig zag groove track.

Each straight groove section 2 includes on its floor 8 an array of index marks 20 that are sensed by light pen 10. The number of index marks 20 is preferably greater than one hundred per linear inch and they are preferably light absorbent (black).

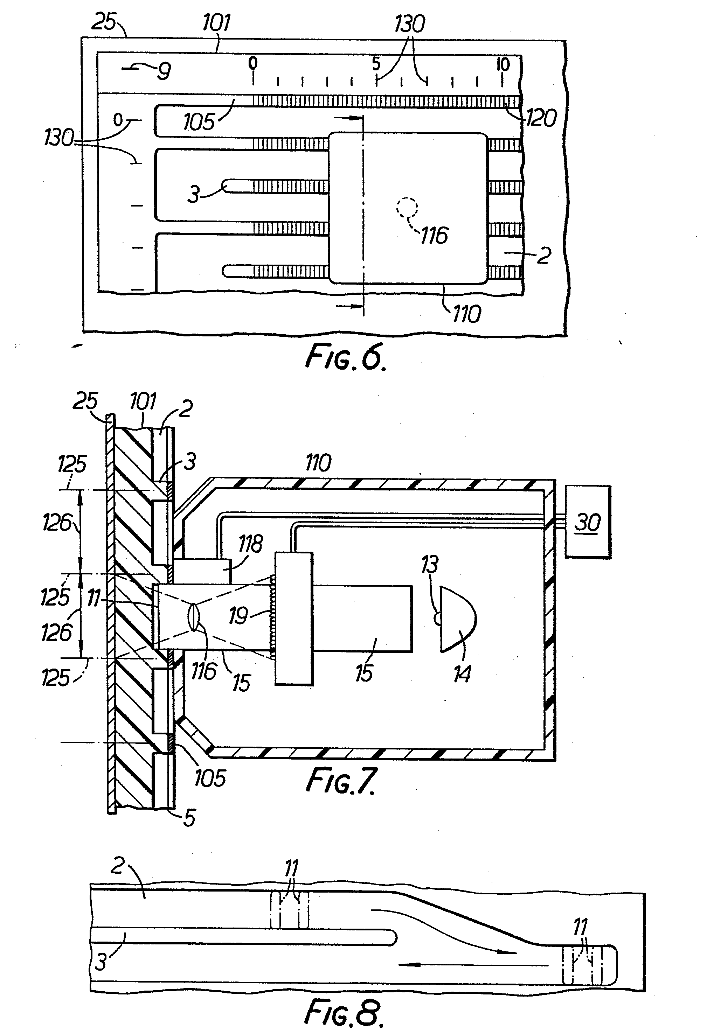

Guide sheet 1 includes four registration holes 7 that can be used for registering it by dowels with a document to be read having corresponding registration holes. It also includes two black linear marks 9 engraved onto its face 6. These can be used, shown in Figure 5, as an alternative to dowelling for positioning guide sheet 1 onto a document 25 to be read which has registration marks 31 on it corresponding to engraved marks 9.

As illustrated in Figure 4 light from a light source 13 is concentrated by means of a reflector 14 onto one end of a light guide 15, made of transparent material, the other end of which constitutes one of guide tips 11, passing the light onto the portion of document 25 being scanned. A lens 16 focusses the image of the portion being scanned onto photodetector arrangement 17 comprising a photo detector 18 arranged to detect index marks 20 on guide sheet 1 and a linear array of photo detectors 19 extending in the direction normal to that of straight tracks 2. The number of photo detectors 19 is preferably 16 or more. Computer 30 is arranged to record the outputs of photo detectors 19 each time an index mark 20 is sensed by photo detector 18 during scanning. The computer 30 builds up a dot image of the line of text as it is scanned.

The computer is arranged on completion of a line scan to examine in turn the dot image of each character in the scanned line, and to recognise it. Recognition can be by comparison of the character dot image read with each of a set of reference character dot images held permanently in the computer, to find the reference character dot image that most closely resembles the character dot image read. The computer is arranged to have associated with each reference character dot image a character code. On recognition of each character read the computer stores in a file the code of the matching reference image. In this way the computer can build up in the file a string of coded characters representing the complete document.

Though it is preferred to have over one hundred index marks 20 per inch, it is possible to have a much smaller number, for example, ten per inch. In this case computer 30 still has an indication of speed of pen travel, but it is arranged to receive and store or process the outputs of photo detectors 19 repeatedly at a frequency that is a multiple of the frequency of index signals from detector 18.

Index marks 20 cease at a short distance before the end of straight track 2 and the start of the next hairpin-bend. The computer 30 is arranged to note the ceasing of sensed index marks 20 and to deduce from this that a line scan has been completed. Alternatively, a special mark or code sequence may be provided in order to give a positive indication of the end of a line scan. At this point in time the computer 30 can analyse the dot image of the line just scanned and convert it into a string of alpha-numeric codes. The computer 30 also recognises from the fact that index marks have ceased that the next line to be scanned, if any, will be read backwards relative to the one just completed. Index marks 20 as well as being useful in providing a dot image of the text which is independant of speed of travel of the light pen are also useful in indicating to the computer 30 the exact places where spaces in the text are being read.

The arrangement just described does not scan document 25 in areas under index marks 20 and under ridges 3.

Figures 6 and 7 illustrate an embodiment that overcomes this problem, allowing text of greater height than that of transparent tracks 2 to be read, as well as drawings and diagrams spanning many tracks.

Guide sheet 101 includes a magnetic layer or coating 105 on its face 5 which is permanently magnetised to provide a row of index marks 120 adjacent to each straight track 2, on ridge 3. 118 in Figure 7 is a magnetic sensor arranged to detect these index marks. Lines 125 are the centre lines of ridges 3 and 126 is the spacing between them. Lens 116 having an aperture diameter smaller than span 126 and placed close to tips 11 is arranged to project an image of a portion of document 25 having a height equal to 126 onto photo detector array 19. This enables complete scanning of document 25, without missing portions between successively scanned bands. Since all of the document is scanned, one guide sheet can be used to scan a variety of documents each having a different line centre to line centre spacing in the printing. Also drawings and diagrams can be copied into the computer. As before, the scanned text is illuminated by a light guide 15, and the outputs of index sensor 118 and photodetector 19 are fed to computer 30.

As an alternative, coating 105 can be a white reflective layer having black index marks 120 marked on it, in which case 118 is arranged to be an optical sensor.

Guide sheet 101 includes grid marks 130 extending along the top edge and the left hand edge of the sheet. These can be used in applications when only part of the text under guide sheet 101 is required. The grid positions defining the rectangular area required are keyed into the computer 30 and the computer 30 is arranged to discard text read outside this area.

For all embodiments the photo detector can be arranged to respond only to a specific colour. For example, yellow and light source 13 and the transparent guide sheet can be of the same one colour, so as to minimise the extraneous effect of ambient light.

For all embodiments the lighting source and the photo detectors can be housed outside the light pen, for example, on an interface card in the computer 30, and connected to the relevant points inside the light pen by flexible optical light guides.

For all embodiments the portions of guide track joining one straight track 2 to the next can take the form shown in Figure 8. With this form light pen 10 is nudged down at the end of its traverse to the correct level for starting the next traverse.

0142967

CLAIMS:

1. Apparatus for scanning human readable information on a document comprising a guide member arranged to be placed on said document and including means defining at least one straight guide track, and a hand propelled scanning head having a tip arrangement for engagement with said track for travelling along it, said tip arrangement being adapted to prevent rotation of said scanning head during its travel along said track, said apparatus including means independant of marks on said document for generating timing signals having a frequency proportional to the speed of travel of said scanning head along said track and said scanning head further including means for sensing a linear array of points on said document, said linear array being aligned at an angle relative to the direction of travel along said track.

2. Apparatus according to claim 1, wherein said guide member is a sheet of transparent material having a zig zag track consisting of a plurality of said means defining straight guide tracks.

3. Apparatus according to claim 1, wherein each said guide track defining means is provided with a row of index marks spaced apart in the direction of travel of said scanning head.

4. Apparatus according to claim 1, wherein said means defining at least one guide track comprises means defining a straight groove in one surface of said guide member with the floor of said groove being transparent whereby to permit reading of said document by said scanning head through said floor.

5. Apparatus according to claim 4, wherein said guide member is a sheet of transparent material having a plurality of said means defining straight guide tracks, and wherein said scanning head includes a light sensitive array and a lens adapted and disposed relative to said floor to cause an area of said document to be focussed on said array, said area focussed having a height larger than that of said groove whereby to permit scanning of areas of said document between said straight guide tracks.

6. Apparatus according to claim 1, and comprising means arranged to recognise said human readable information and to convert it into a series of character codes.

7. Apparatus for reading information on a document comprising a guide member arranged to be placed on said document, said guide member including at least one straight guide track, said apparatus including a hand propelled scanning head having a tip arrangement engaged with said track for travelling along it, and means independent of marks on said document indicating arrival of said scanning head at an end of said straight guide track.

8. Apparatus according to claim 7, wherein said scanning head includes means for sensing a linear array of points on said document, said linear array being aligned at an angle relative to the direction of travel along said track.

9. Apparatus according to claim 7, wherein said guide member is a sheet of transparent material having a zig zag track consisting of a plurality of said straight guide tracks joined by connecting portions.

0142967

10. Apparatus according to claim 7, wherein the apparatus includes means independent of marks on said document for generating timing signals having a frequency proportional to the speed of travel of said scanning head along said track.

11. Apparatus according to claim 7, wherein said track end indicating means comprises means independent of marks on said document for generating a code signal indicative of the end of the track.

12. Apparatus according to claim 10, wherein said track end indicating means comprises electronic means for determining the absence of said timing signals whereby to indicate the end of a track.

13. Apparatus as defined in claim 7 and comprising means arranged to recognise said human readable information and to convert it into a string of character codes.

14. A guide sheet for guiding a hand propelled scanning head arranged for scanning a printed document said guide sheet including a zig zag track having plurality of straight track portions and including an array of index marks associated with each said straight track portion.

15. A guide sheet as defined in claim 14, wherein each said straight track portion is in the form of a groove in said guide sheet, the floor of which groove being transparent.

FIG.1.

FIG.2.

FIG.3.

**FIG.4.**

**FIG.5.**

FIG.6.

FIG.7.

FIG.8.